# EUROPÄISCHE PATENTANMELDUNG

(11) **EP 0 853 099 A2**
(43) Veröffentlichungstag der Anmeldung: **15.07.1998**
(21) Anmeldenummer: 97810933.8
(22) Anmeldetag: 01.12.1997
(51) Int. Cl.: C08L 65/00

(54) **Thixotropiermittel für gefüllte Cycloolefine**

(30) Priorität: 10.12.1996 CH 3025/96
(71) Anmelder: Ciba Specialty Chemicals Holding Inc., 4057 Basel (CH)
(72) Erfinder: Setiabudi, Frans, 79427 Eschbach (DE)

(57) **Zusammenfassung**

Eine Zusammensetzung enthaltend
(a) ein gespanntes Cycloolefin,
(b) einen Füllstoff und
(c) 0,01-10,0 Gew.-%, bezogen auf die Summe der Komponenten (a) + (b), eines Copolymeren ausgewählt aus Core/Shell-Polymeren und Mikrogelen,
zeichnet sich durch eine hohe Lagerstabilität aus und liefert Polymerisate mit hoher Wärmestabilität, Zähigkeit und mechanischer Festigkeit, die sich als Umhüllungsmaterial für elektrische und elektronische Bauteile eignen.

## Beschreibung

Die vorliegende Erfindung betrifft eine Zusammensetzung enthaltend ein gespanntes Cycloolefin, einen Füllstoff und ein Core/Shell-Polymeres oder ein Mikrogel, ein Verfahren zur Herstellung eines Metathesepolymerisats aus dieser Zusammensetzung sowie die Verwendung dieser Zusammensetzung als Umhüllungsmaterial für elektrische oder elektronische Bauteile.

Aufgrund der guten mechanischen und elektrischen Eigenschaften sollten Cycloolefine, die mittels ringöffnender Metathese-Polymerisation (ROMP) polymerisiert werden können, grundsätzlich für Elektroanwendungen geeignet sein. Solche Systeme werden beispielsweise in WO 96/16100, WO 96/20235 oder in der EP-A-348 852 beschrieben. Die niedrige Viskosität von Cycloolefinen, wie zum Beispiel Dicyclopentadien, erlaubt einen sehr hohen Füllgrad; d.h. mit üblichen Füllstoffen, wie Quarzmehl oder Wollastonit, können Mischungen mit einem Füllstoffgehalt von bis zu 75 % hergestellt werden. Allerdings neigen die Füllstoffe in solchen Mischungen zur Sedimentation, d.h. bei der Lagerung können sich grössere Agglomerate bilden, wodurch die Verarbeitbarkeit erheblich beeinträchtigt wird. Durch den Zusatz von üblichen Thixotropiermitteln, wie beispielsweise Aerosil®, konnte dieses Problem bisher nicht gelöst werden. Auch das Auflösen von thermoplastischen Verdickungsmitteln bei erhöhter Temperatur ist bei Verwendung von hitzeempfindlichen Cycloolefinen wie Dicyclopentadien nicht geeignet.

Es wurde nun gefunden, dass durch Zusatz von geringen Mengen von Core/Shell-Polymeren oder Mikrogelen die Sedimentation des Füllstoffs verhindert werden kann. Auch bei Lagerung über längere Zeit bleiben solche Mischungen homogen und können leicht aufgerührt werden, da bereits leichtes Rühren eine Viskositätserniedrigung bewirkt (Thixotropieeffekt).

Gegenstand der vorliegenden Erfindung ist eine Zusammensetzung enthaltend
(a) ein gespanntes Cycloolefin,
(b) einen Füllstoff und
(c) 0,01-10,0 Gew.-%, bezogen auf die Summe der Komponenten (a) + (b), eines Copolymeren ausgewählt aus Core/Shell-Polymeren und Mikrogelen.

Unter gespannten Cycloolefinen sind im Rahmen der vorliegenden Erfindung alle Cycloolefine mit Ausnahme des Cyclohexens und seiner Derivate, die nicht mit der ringöffnenden Metathese polymerisiert werden können, zu verstehen.

Bei den gespannten Cycloolefinen kann es sich um monocyclische oder polycyclische kondensierte bzw. überbrückte Ringsysteme handeln, zum Beispiel mit zwei bis vier Ringen. Diese Ringsysteme können unsubstituiert oder substituiert sein und ein oder mehrere Heteroatome, wie zum Beispiel O, S, N oder Si und/oder kondensierte aromatische oder heteroaromatische Ringe, wie zum Beispiel o-Phenylen, o-Naphthylen, o-Pyridinylen oder o-Pyrimidinylen, enthalten. Die einzelnen cyclischen Ringe können 3 bis 16, bevorzugt 3 bis 12 und besonders bevorzugt 3 bis 8 Ringglieder enthalten. Die gespannten Cycloolefine können weitere nichtaromatische Doppelbindungen enthalten, je nach Ringgrösse bevorzugt 2 bis 4 solcher zusätzlicher Doppelbindungen. Die Ringsubstituenten sind inert, d.h. diese Substituenten beeinträchtigen die chemische Stabilität und die Thermostabilität der ROMP-Katalysatoren nicht.

Wenn die gespannten Cycloolefine mehr als eine Doppelbindung enthalten, zum Beispiel 2 bis 4 Doppelbindungen, können sich abhängig von den Reaktionsbedingungen, dem gewählten Monomer und der Katalysatormenge, auch vernetzte Polymerisate bilden.

Bevorzugte Komponenten (a) sind Diels-Alder-Addukte von Cyclopentadien.

Geeignete Diels-Alder-Addukte von Cyclopentadien sind beispielsweise die folgenden Verbindungen:

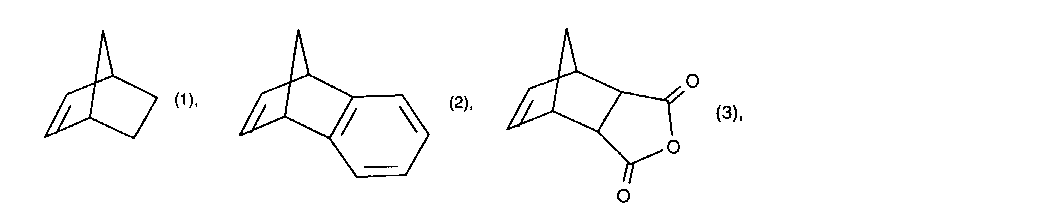

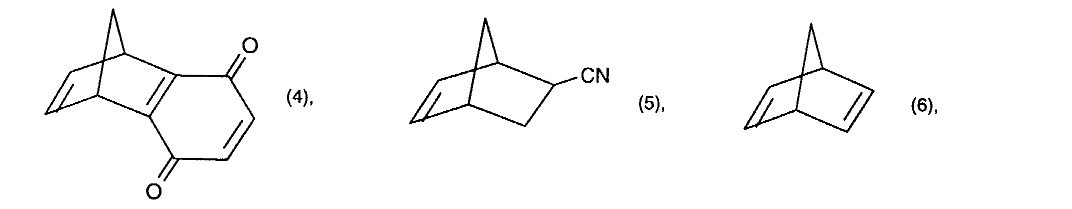

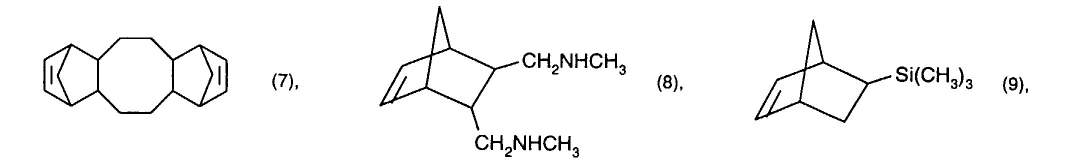

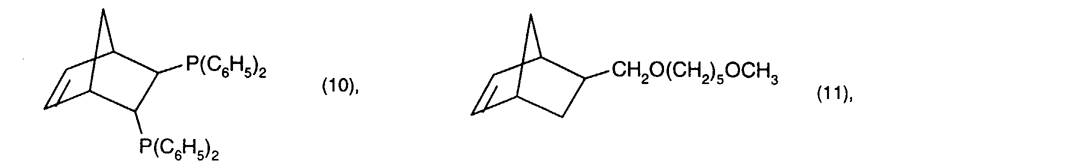

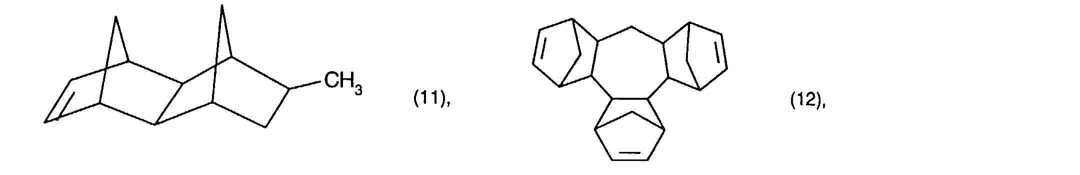

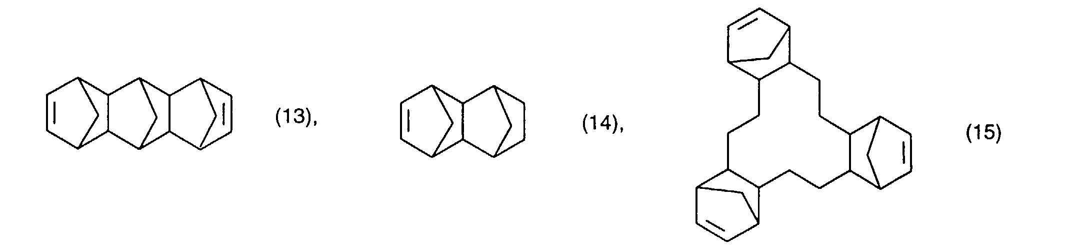

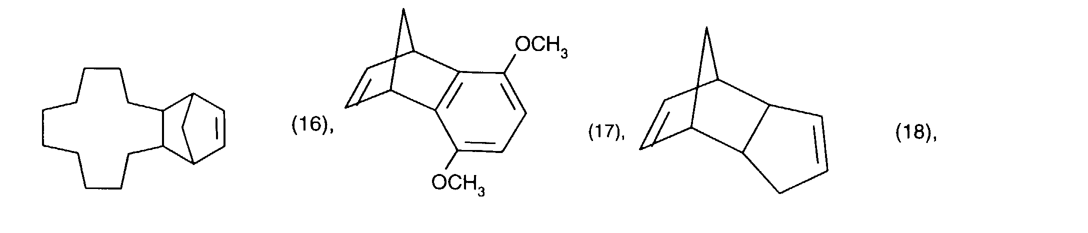

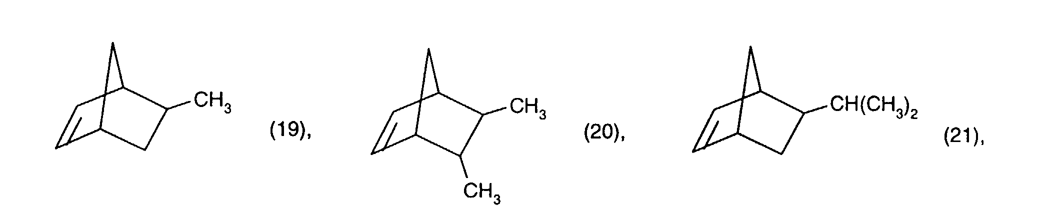

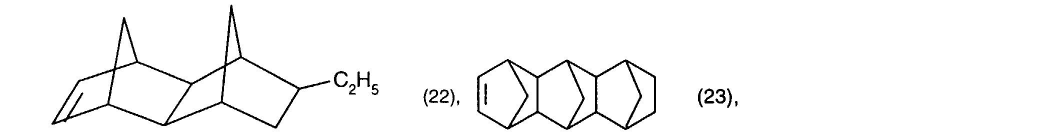

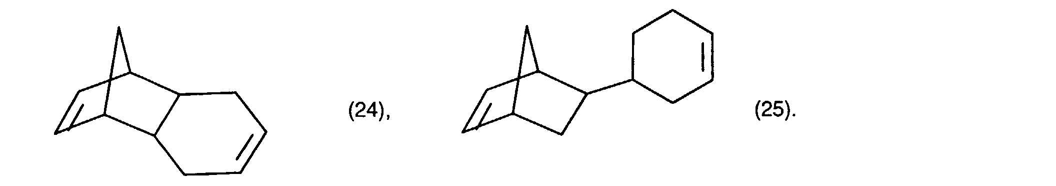

Bevorzugte Diels-Alder-Addukte sind Norbornen (1), Norbornadien (6), Cyclohexenylnorbornen (25), Tetracyclododecen (14), Methyltetracyclododecen (11) und insbesondere Dicyclopentadien (18).

Geeignete Füllstoffe, die als Komponente (b) in den erfindungsgemässen Zusammensetzungen verwendet werden können, sind beispielsweise Metallpulver, Holzmehl, Glaspulver, Glaskugeln, Halbmetall- und Metalloxide, wie zum Beispiel SiO₂ (Aerosile, Quarz, Quarzmehl, Quarzgut), Aluminiumoxid, Aluminiumoxidtrihydrat und Titanoxid, Halbmetall- und Metallnitride, wie zum Beispiel Siliziumnitrid, Bornitrid und Aluminiumnitrid, Halbmetall- und Metallcarbide (SiC), Metallcarbonate (Dolomit, Kreide, CaCO₃), Metallsulfate (Baryt, Gips), Gesteinsmehle, natürliche oder synthetische Mineralien, beispielsweise Metallsilikate wie Talkum, Glimmer, Kaolin, Wollastonit und Bentonit, oder auch Kunststoffpulver, z.B. aus Polyethylen, Polypropylen oder Polybutylenterephthalat.

Vorzugsweise wird ein Metalloxid, -carbonat, -sulfat oder -silikat oder SiO₂ als Komponente (b) verwendet.

Besonders bevorzugt als Komponente (b) sind CaCO₃, Al₂O₃, Al(OH)₃, Wollastonit und insbesondere SiO₂.

Von den verschiedenen SiO₂-Modifikationen sind Quarzmehl und Quarzgutmehl besonders bevorzugt.

Als Komponente (c) können in den erfindungsgemässen Zusammensetzungen sowohl Core/Shell-Polymere als auch Mikrogele sowie Mischungen von Mikrogelen und Core/Shell-Polymeren eingesetzt werden.

Core/Shell-Polymere sind Pfropfcopolymerisate, die aus einem elastomeren teilvernetzten Kern (T_{g}< 0 °C) und einer aufgepfropften harten Schale (T_{g} > Raumtemperatur) bestehen. Teilchengrösse und Pfropfgrad dieser Core/Shell-Polymeren lassen sich über die Herstellungsverfahren einstellen. Die Teilchengrössen liegen üblicherweise zwischen 50 und 800 nm. Bevorzugt sind Systeme mit Teilchengrössen von 100 bis 500 nm, insbesondere 100 bis 300 nm.
Core/Shell-Polymere werden im allgemeinen nach einem Emulsions-Polymerisations-Verfahren hergestellt und sind z.B. im US-Patent 4,419,496 oder in der EP-A-45357 beschrieben und zum Teil im Handel erhältlich, wie z.B. Acryloid® oder Paraloid® (Rohm & Haas, USA).

Als kautschukartige Pfropfgrundlage (Kern) sind beispielsweise Polybutadien, Poly-n-butylacrylat, Polysiloxan, Polysulfide, Acrylkautschuk, Butylkautschuk, Isopren-Elastomere, Ethylen/Propylen/Dien-Copolymerisate und Styrol/Butadien-Copolymere geeignet.

Vorzugsweise enthält das Core-Material Polybutadien oder Styrol/Butadien-Copolymere.

Die Pfropfauflage (Schale) kann zum Beispiel aus Polystyrol, Polyacrylnitril, Methylacrylat/Acrylsäure-Copolymeren, Polymethylmethacrylat, α-Methylstyrol/Acrylnitril/Methylmethacrylat-Copolymeren, Styrol/Acrylnitril-Copolymeren oder Styrol/Acrylnitril/Glycidylmethacrylat-Copolymeren oder aus Mischungen dieser Polymeren bestehen.

Vorzugsweise wird als Shell-Material Polymethylmethacrylat eingesetzt. Bevorzugt eingesetzt werden Core/Shell-Polymere enthaltend einen Kern (Core) ausgewählt aus der Gruppe bestehend aus Polybutadien, Polybutadien/Polystyrol und Polybutadien/Acrylnitril und eine Hülle (Shell) ausgewählt aus der Gruppe bestehend aus Polymeren auf der Basis von Methylmethacrylat, Methacrylsäurecyclohexylester, Acrylsäurebutylester, Styrol, Methacrylnitril, Vinylacetat und Vinylalkohol.

In einer weiteren Ausführungsform enthalten die erfindungsgemässen Zusammensetzungen als Komponente (c) ein Mikrogel.

Unter Mikrogelen versteht man im allgemeinen Makromoleküle, deren Kettensegmente im Bereich der einzelnen Knäuel über kovalente Brücken vernetzt sind.
Mikrogele können nach verschiedenen bekannten Polymerisationsmethoden hergestellt werden. Vorteilhaft ist die Emulsionspolymerisation von Verbindungen mit polymerisierbaren C-C-Doppelbindungen in Gegenwart von sogenannten mehrfunktionellen Vernetzern, beispielsweise nach der Saat-Methode (seeding technique). Dabei liegen die Mikrogelpartikel nach der Polymerisation in Form einer wässrigen Emulsion oder Suspension vor.
Als mehrfunktionelle Vernetzer können im Prinzip alle Verbindungen, die mindestens zwei polymerisierbare C-C-Doppelbindungen enthalten, Anwendung finden.
Dabei entstehen intramolekular vernetzte Copolymere, die im allgemeinen Partikelgrössen im Nanometerbereich (ca. 5-1000 nm) aufweisen.

Ein bevorzugtes Mikrogel ist ein Copolymer aus mindestens einer ungesättigten Carbonsäure und mindestens einem mehrfunktionellen Vernetzer.

Ein besonders bevorzugtes Mikrogel ist ein Copolymer aus mindestens einer ungesättigten Carbonsäure, mindestens einem carbonsäuregruppenfreien Vinylmonomer und mindestens einem mehrfunktionellen Vernetzer.

Zur Herstellung von Carbonsäuregruppen enthaltenden Mikrogelen eignen sich grundsätzlich alle Carbonsäuren, die eine polymerisierbare C-C-Doppelbindung enthalten.

Bevorzugte ungesättigte Carbonsäuren sind Acrylsäure, Methacrylsäure, 2-Carboxyethylacrylat, 2-Carboxyethylmethacrylat, Phthalsäuremono(2-acryloylethyl)ester, Phthalsäuremono(2-methacryloylethyl)ester, Maleinsäure, Maleinsäu remonomethylester, Maleinsäuremonoethylester, Fumarsäure, Fumarsäuremonomethylester, Fumarsäuremonoethylester, ltaconsäure, Zimtsäure, Crotonsäure, 4-Vinylcyclohexancarbonsäure, 4-Vinylphenylessigsäure und p-Vinylbenzoesäure.

Acrylsäure und Methacrylsäure sind insbesondere bevorzugt.

Als mehrfunktionelle Vernetzer eignen sich grundsätzlich alle Verbindungen, die mindestens zwei polymerisierbare C-C-Doppelbindungen enthalten. Ebenfalls geeignet als mehrfunktionelle Vernetzer sind Gemische aus mindestens zwei Vinylmonomeren, wie z.B. Methacrylsäure und Glycidylmethacrylat, die über zusätzliche funktionelle Gruppen während oder nach der Polymerisationsreaktion miteinander reagieren können.

Vorzugsweise wird ein polyfunktioneller Acrylsäureester oder Methacrylsäureester eines aliphatischen, cycloaliphatischen oder aromatischen Polyols, ein Additionsprodukt von Acrylsäure oder Methacrylsäure und einer Polyglycidylverbindung, ein Additionsprodukt von Acrylsäure oder Methacrylsäure und Glycidylacrylat oder -methacrylat, ein Acrylsäurealkenylester oder Methacrylsäurealkenylester, ein Dialkenylcyclohexan oder ein Dialkenylbenzol als mehrfunktioneller Vernetzer verwendet.

Besonders bevorzugte mehrfunktionelle Vernetzer sind Ethylenglykoldiacrylat, Ethylenglykoldimethacrylat, Propylenglykoldiacrylat, Propylenglykoldimethacrylat, 1,4-Butandioldiacrylat, 1,4-Butandioldimethacrylat, Polyethylenglykoldiacrylat, Polyethylenglykoldimethacrylat, Polypropylenglykoldiacrylat, Polyproylenglykoldimethacrylat, 1,1,1-Trimethylolpropantriacrylat, 1,1,1-Trimethylolpropantrimethacrylat, Bisphenol-A-diglycidyletherdiacrylat, Bisphenol-A-diglycidyletherdimethacrylat, Acrylsäureallylester, Methacrylsäureallylester, Divinylcyclohexan und Divinylbenzol.

Das zur Herstellung der Mikrogele verwendete Monomerengemisch kann ein oder mehrere carbonsäuregruppenfreie Vinylmonomere enthalten, wie zum Beispiel Butadien und Butadienderivate, Acrylnitril, Methacrylnitril, Acrylsäureester und -amide, Methacrylsäureester und -amide, Vinylether und -ester, Allylether und -ester, Styrol und Styrolderivate.

Bevorzugte carbonsäuregruppenfreie Vinylmonomere sind Alkylester, Hydroxyalkylester und Glycidylester von ungesättigten Carbonsäuren und Styrolderivate.

Besonders bevorzugte carbonsäuregruppenfreie Vinylmonomere sind Methylacrylat, Methylmethacrylat, Ethylacrylat, Ethylmethacrylat, 2-Hydroxyethylacrylat, 2-Hydroxyethylmethacrylat, Butylacrylat, Butylmethacrylat, 2-Ethylhexylacrylat, 2-Ethylhexylmethacrylat und Styrol.

Die Mengen der Komponenten (a) und (b) können in den erfindungsgemässen Zusammensetzungen in weiten Bereichen variieren.
Vorzugsweise beträgt das Gewichtsverhältnis der Komponenten (a) : (b) von 5 : 1 bis 1 : 5, besonders bevorzugt 3 : 1 bis 1 : 3 und insbesondere bevorzugt 2 : 1 bis 1 : 2.

Die Komponente (c) ist bereits in sehr geringen Mengen wirksam. Vorzugsweise enthalten die erfindungsgemässen Zusammensetzungen 0,02-2,0 Gew.-%, insbesondere 0,04-1,0 Gew.-%, der Komponente (c), bezogen auf die Summe der Komponenten (a) + (b).

Die erfindungsgemässen Zusammensetzungen lassen sich in Gegenwart eines geeigneten Katalysators problemlos zu Produkten mit guten mechanischen und elektrischen Eigenschaften polymerisieren.

Einen weiteren Erfindungsgegenstand bildet daher eine Zusammensetzung enthaltend die oben definierten Komponenten (a) bis (c) und zusätzlich (d) einen Katalysator für die ringöffnende Metathese-Polymerisation.

Als Katalysatoren für die ringöffnende Metathese-Polymerisation (ROMP-Katalysatoren) ist dem Fachmann eine grosse Zahl von Verbindungen der Übergangsmetalle Titan, Vanadium, Molybdän, Wolfram, Rhenium, lridium, Ruthenium und Osmium bekannt. Hierbei handelt es sich beispielsweise um komplexe Metallhalogenide, Metallo-Carbene oder Koordinations-Katalysatoren vom Ziegler-Natta-Typ. Alle diese bekannten ROMP-Katalysatoren können im Prinzip als Komponente (d) in den erfindungsgemässen Zusammensetzungen verwendet werden.

Da die Füllstoffe gemäss Komponente (b) oft geringe Mengen Wasser enthalten, empfiehlt es sich feuchtigkeitsunempfindliche ROMP-Katalysatoren einzusetzen, wie z.B. die in WO 96/16100 und WO 96/20235 beschriebenen Ruthenium(+II)-und Osmium(+II)-Komplexsalze.

Weitere geeignete ROMP-Katalysatoren sind die in der WO 93/20111 beschriebenen Metall-Carben-Komplexe.

Bevorzugte ROMP-Katalysatoren sind die Verbindungen der Formel I

(R₁R₂R₃P)ₓ L_{y} Me²⁺Z₁⁻Z₂⁻ (I),

worin R₁, R₂ und R₃ unabhängig voneinander H, C₁-C₂₀-Alkyl, C₁-C₂₀-Alkoxy, unsubstituiertes oder mit C₁-C₆-Alkyl, C₁-C₆-Halogenalkyl oder C₁-C₆-Alkoxy substituiertes C₄-C₁₂-Cycloalkyl oder Cycloalkoxy, oder unsubstituiertes oder mit C₁-C₆-Alkyl, C₁-C₆-Halogenalkyl oder C₁-C₆-Alkoxy substituiertes C₆-C₁₆-Aryl oder C₆-C₁₆-Aryloxy, oder unsubstituiertes oder mit C₁-C₆-Alkyl, C₁-C₆-Halogenalkyl oder C₁-C₆-Alkoxy substituiertes C₇-C₁₆-Aralkyl oder C₇-C₁₆-Aralkyloxy darstellen; die Reste R₂ und R₃ gemeinsam unsubstituiertes oder mit C₁-C₆-Alkyl, C₁-C₆-Halogenalkyl oder C₁-C₆-Alkoxy substituiertes Tetra- oder Pentamethylen, oder Tetra- oder Pentamethylendioxyl bedeuten, oder unsubstituiertes oder mit C₁-C₆-Alkyl, C₁-C₆-Halogenalkyl oder C₁-C₆-Alkoxy substituiertes und mit ein oder zwei 1,2-Phenylenresten kondensiertes Tetra- oder Pentamethylen, oder Tetra- oder Pentamethylendioxyl darstellen, oder unsubstituiertes oder mit C₁-C₆-Alkyl, C₁-C₆-Halogenalkyl oder C₁-C₆-Alkoxy substituiertes und in den 1,2- und 3,4-Stellungen mit 1,2-Phenylen kondensiertes Tetramethylendioxyl darstellen, und R₁ die zuvor angebene Bedeutung hat;
L einen Neutralliganden bedeutet, Me für Ru oder Os steht, Z₁⁻ und Z₂⁻ je ein einfach geladenes Anion oder Z₁⁻ und Z₂⁻ zusammen ein zweifach geladenes Anion darstellen, x eine Zahl von 1 bis 3 und y eine Zahl von 0 bis 3 darstellen, wobei gilt 2 ≤ x+y ≤ 4.

In der Formel I können die Alkylgruppen geradkettig oder verzweigt sein. Dasselbe gilt auch für den bzw. jeden Alkylteil von Alkoxy, Hydroxyalkyl, Halogenalkyl und von weiteren Alkyl enthaltenden Gruppen. Diese Alkylgruppen enthalten bevorzugt 1 bis 12, besonders bevorzugt 1 bis 8 und insbesondere bevorzugt 1 bis 4 C-Atome.

Alkyl umfaßt beispielsweise Methyl, Ethyl, Isopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Alkoxy ist beispielsweise Methoxy, Ethoxy, Propyloxy, lsopropyloxy, n-Butyloxy, lsobutyloxy, sek.-Butyloxy und tert.-Butyloxy.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Isopropyl-, n-Propyl-, n-Butyl-, Isobutyl-, sek.-Butyl-und tert.-Butylgruppen sowie die verschiedenen isomeren halogenierten Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Bei Cycloalkyl handelt es sich bevorzugt um C₅-C₈-Cycloalkyl, besonders um C₅- oder C₆-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cycloalkoxygruppen sind beispielsweise Cyclopentyloxy, Methylcyclopentyloxy und Cyclohexyloxy.

Aryl enthält bevorzugt 6 bis 10 C-Atome. Es kann sich beispielsweise um Phenyl, Pentalinyl, Indenyl, Naphtyl, Azulinyl und Anthryl handeln.

Aryloxygruppen sind beispielsweise Phenyloxy, Naphthyloxy und Anthryloxy.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, 4-Phenylbutyl und α,α-Dimethylbenzyl handeln.

Beispiele für Aralkyloxygruppen sind Benzyloxy, Phenethyloxy, 3-Phenylpropyloxy, α-Methylbenzyloxy, 4-Phenylbutyloxy und α,α-Dimethylbenzyloxy.

Hydroxyalkyl umfaßt beispielsweise Hydroxymethyl, Hydroxyethyl, 1-Hydroxyisopropyl, 1-Hydroxy-n-propyl, 2-Hydroxy-n-butyl, 1-Hydroxyisobutyl, 1-Hydroxy-sek.-butyl, 1-Hydroxy-tert.-butyl sowie die verschiedenen hydroxylsubstituierten isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Bevorzugt als Komponente (d) sind Verbindungen der Formel I, worin Me für Ruthenium steht.

Weiterhin bevorzugt als Komponente (d) sind Verbindungen der Formel I, worin R₁, R₂ und R₃ unabhängig voneinander für C₁-C₆-Alkyl, C₁-C₆-Alkoxy, C₄-C₁₂-Cycloalkyl, C₄-C₁₂-Cycloalkoxy, C₆-C₁₆-Aryl oder C₆-C₁₆-Aryloxy stehen.

Besonders bevorzugt sind Verbindungen der Formel I, worin R₁, R₂ und R₃ unabhängig voneinander für Isopropyl, sek.-Butyl, Phenyl, Tolyl, Cyclopentyl oder Cyclohexyl stehen.

L steht in der Formel I vorzugsweise für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃.

Bevorzugt sind weiterhin Verbindungen der Formel I, worin Z₁⁻ und Z₂⁻ unabhängig voneinander für H⁻, F⁻, Cl⁻, Br⁻, I⁻ oder unsubstituiertes oder durch eine oder mehrere Hydroxidgruppen, Aminogruppen, Halogenatome, C₁-C₂₀-Alkyl-, C₁-C₂₀-Alkoxy-, C₄-C₁₂-Cycloalkyl-, C₄-C₁₂-Cycloalkoxy-, C₆-C₁₆-Aryl-, C₆-C₁₆-Aryloxy- oder C₇-C₁₆-Aralkylgruppen substituiertes Cyclopentadienyl stehen.

Die Komplexverbindungen der Formel I sind bekannt und beispielsweise in der WO 96/16100 und der WO 96/20235 beschrieben.

Beispiele für Ruthenium- und Osmiumverbindungen sind der Formel I sind [Tos bedeutet Tosylat, Cp steht für Cyclopentadienyl und C₆H₁₁ ist Cyclohexyl]: (C₆H₁₁)₂HPRu(p-Cymol)Cl₂, (C₆H₁₁)₃PRu(p-Cymol)Cl₂, (C₆H₁₁)₃PRu(p-Cymol)(Tos)₂, (C₆H₁₁)₃PRu(p-Cymol)Br₂, (C₆H₁₁)₃PRu(p-Cymol)CIF, (C₆H₁₁)₃PRu(C₆H₆)(Tos)₂, (C₆H₁₁)₃PRu(CH₃-C₆H₅)(Tos)₂, (C₆H₁₁)₃PRu(C₁₀H₈)(Tos)₂, (i-C₃H₇)₃PRu(p-Cymol)Cl₂, (CH₃)₃PRu(p-Cymol)Cl₂, (C₆H₁₁)₃PRu(CH₃-CN)(C₂H₅-OH)(Tos)₂, (C₆H₁₁)₃PRu(p-Cymol)(CH₃-CN)₂(PF₆)₂, (C₆H₁₁)₃PRu(p-Cymol)(CH₃-CN)₂(Tos)₂, (n-C₄H₉)₃PRu(p-Cymol)(CH₃-CN)₂(Tos)₂, (C₆H₁₁)₃PRu(CH₃CN)Cl₂, (C₆H₁₁)₃PRu(CH₃-CN)₂Cl₂, (n-C₄H₉)₃PRu(p-Cymol)Cl₂, (C₆H₁₁)₃PRu(p-Cymol)(C₂H₅OH)₂(BF₄)₂, (C₆H₁₁)₃PRu(p-Cymol)(C₂H₅OH)₂(PF₆)₂, (i-C₃H₇)₃POs(p-Cymol)Cl₂, (CH₃)₃POs(p-Cymol)Cl₂, (C₆H₅)₃POs(p-Cymol)Cl₂, [(C₆H₁₁)₃P]₃Ru(CH₃-CN), (C₅H₉)₃PRu(p-Cymol)Cl₂, (C₆H₁₁)₃PRu(p-Cymol)HCl, (C₆H₁₁)₃PRu[1,2,4,5-(CH₃)₄C₆H₂]Cl₂, (C₆H₁₁)₃PRu[1,3,5-(i-C₃H₇)₃C₆H₃]Cl₂, (C₆H₁₁)₃PRu[(C₄H₉)-C₆H₅]Cl₂, (C₆H₁₁)₃POs(p-Cymol)Cl₂, (C₆H₅)₃PRu(p-Cymol)HCl, [(C₆H₁₁)₃P]₂Ru(CH₃-CN)(Tos)₂, RuCl₂(p-Cymol)[(C₆H₁₁)₂PCH₂CH₂P(C₆H₁₁)₂], (C₆H₁₁)₃PRu(p-Cymol)(C₂H₅OH)(BF₄)₂, (C₆H₁₁)₃PRu(C₆H₆)(C₂H₅OH)₂(Tos)₂, (C₆H₁₁)₃PRu(i-C₃H₇-C₆H₅)(Tos)₂, (C₆H₁₁)₃PRu(C₆H₆)(p-Cymol)Br₂, (C₆H₁₁)₃PRu(Biphenyl)(Tos)₂, (C₆H₁₁)₃PRu(Anthracen)(Tos)₂, (2-CH₃C₆H₄)₃POs(p-Cymol)Cl₂ und (C₆H₁₁)₃PRu(Chrysen)(Tos)₂.

Besonders bevorzugte Verbindungen der Formel I sind [(C₆H₁₁)₃P]₂RuCl₂, [(C₆H₅)₃P]₃ RuCl₂, [(C₆H₅)₃P]₃ (CO)RuH₂, [(C₆H₅)₃P]₃ RuClCp, [(C₆H₁₁)₃P]₂(CH₃OH)Ru(Tos)₂, [(o-Tolyl)₃P]₃RuCl₂, [(CH₃)₂CH]₃P(p-Cymol)RuCl₂ und insbesondere (C₆H₁₁)₃P(p-Cymol) RuCl₂.

Die Menge der Komponente (d) in den erfindungsgemässen Zusammensetzungen beträgt vorzugsweise 0,01-15,0 Gew.-%, insbesondere 0,1-10,0 Gew.-%, bezogen auf die Summe der Komponenten (a) + (b).

Der Zusatz von spezifischen Silanen bewirkt eine erhebliche Viskositätssenkung. Auf diese Weise lässt sich ein besonders hoher Füllgrad (ohne Sedimentation des Füllstoffes) erzielen.

Einen weiteren Erfindungsgegenstand bildet daher eine Zusammensetzung enthaltend die oben definierten Komponenten (a) bis (c), gegebenenfalls (d), und zusätzlich (e) ein Silan der Formel II 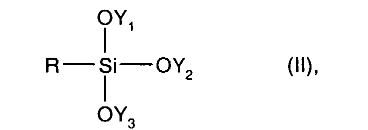 worin R für eine einwertige organische Gruppe mit 2 bis 100 C-Atomen steht, wobei ein oder mehrere C-Atome durch O-, S-, N- oder Si-Atome ersetzt sein können und Y₁, Y₂ und Y₃ unabhängig voneinander C₁-C₂₀-Alkyl, C₅-C₂₀-Aryl, C₆-C₂₀-Aralkyl, C₅-C₁₂-Cydoalkyl, C₂-C₂₀-Alkoxyalkyl oder C₁-C₂₀-Acyl bedeuten.

Die Silane der Formel II sind bekannt und können nach bekannten Methoden hergestellt werden. Zum Teil sind diese Silane kommerziell erhältlich.

Bevorzugt sind Silane der Formel II, worin R als einwertige organische Gruppe mit 2 bis 100 C-Atomen für C₁-C₂₀-Alkyl, C₅-C₂₀-Aryl, C₆-C₂₀-Aralkyl, C₅-C₁₂-Cydoalkyl, C₂-C₂₀-Alkoxyalkyl, C₂-C₂₀-Alkenyl, C₄-C₂₅-Acryloxyalkyl, C₄-C₂₅-Methacryloxyalkyl, C₂-C₂₀-Aminoalkyl, C₄-C₂₅-Glycidyloxyalkyl, C₇-C₂₅-Epoxycyclohexylalkyl oder den Rest eines Polysiloxans steht.

Alkyl als R, Y₁, Y₂ oder Y₃ umfasst beispielsweise Methyl, Ethyl, Isopropyl, n-Propyl, n-Butyl, lsobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Aryl als R, Y₁, Y₂ oder Y₃ enthält bevorzugt 6 bis 10 C-Atome. Es kann sich beispielsweise um Phenyl, Pentalinyl, Indenyl, Naphtyl, Azulinyl und Anthryl handeln.

Aralkyl als R, Y₁, Y₂ oder Y₃ enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, 4-Phenylbutyl und α,α-Dimethylbenzyl handeln.

Bei Cycloalkyl als R, Y₁, Y₂ oder Y₃ handelt es sich bevorzugt um C₅-C₈-Cycloalkyl, besonders um C₅- oder C₆-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Beispiele für Alkoxyalkyl als R, Y₁, Y₂ oder Y₃ sind 2-Methoxyethyl, 2-Ethoxyethyl, 2-Methoxypropyl, 3-Methoxypropyl, 2-Ethoxypropyl und 3-Ethoxypropyl.

Alkenyl als R umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, lsododecenyl, n-Octadec-2-enyl und n-Octadec-4-enyl.

Beispiele für Acryloxyalkyl und Methacryloxyalkyl sind 2-Acryloxyethyl, 2-Methacryloxyethyl, 3-Acryloxypropyl und 3-Methacryloxypropyl.

Geeignete Aminoalkylgruppen sind zum Beispiel 2-Aminoethyl, 3-Aminopropyl, 3-Aminobutyl und 4-Aminobutyl.

Als Glycidyloxyalkylgruppen kommen beispielsweise 2-Glycidylethyl, 3-Glycidylpropyl, 3-Glycidylbutyl und 4-Glycidylbutyl in Betracht.

Epoxycyclohexylalkyl ist vorzugsweise β-(3,4-Epoxycyclohexyl)ethyl.

R in der Formel II bedeutet vorzugsweise Methyl, Ethyl, n-Octyl, Vinyl, 3-Mercaptopropyl, 3-Aminopropyl, 3-Glycidyloxypropyl, 3-Acryloxypropyl, 3-Methacryloxypropyl, β-(3,4-Epoxycyclohexyl)ethyl, N-(β-Aminoethyl)-3-aminopropyl, 3-Ureidopropyl, 3-lsocyanatopropyl, H₂N-CH₂CH₂NH-CH₂CH₂NH-CH₂CH₂CH₂-, (CH₃O)₃Si-CH₂CH₂CH₂NH-CH₂CH₂CH₂- oder eine Gruppe der Formel

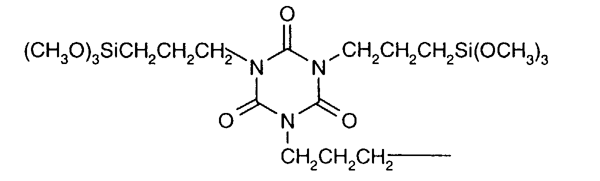

Besonders bevorzugt sind Silane der Formel II, worin R für Methyl, Vinyl, 3-Mercaptopropyl oder 3-Aminopropyl steht.
Y₁, Y₂ und Y₃ sind in der Formel II vorzugsweise Methyl, Ethyl, Acetyl oder 2-Methoxyethyl.

Beispiele für geeignete Silane der Formel II sind Octyltriethoxysilan, Methyltriethoxysilan, Methyltrimethoxysilan, tris-[3-(Trimethoxysilyl)propyl]isocyanurat, Vinyltriethoxysilan, Vinyltrimethoxysilan, Vinyl-tris-(2-methoxyethoxy)silan, γ-Methacryloxypropyltrimethoxysilan, β-(3,4-Epoxycyclohexyl)ethyltrimethoxysilan, γ-Glycidyloxypropyltrimethoxysilan, γ-Mercaptopropyltrimethoxysilan, γ-Aminopropyltriethoxysilan, γ-Aminopropyltrimethoxysilan, N-(β-Aminoethyl)-γ-aminopropyltrimethoxysilan,
H₂NCH₂CH₂NHCH₂CH₂NHCH₂CH₂CH₂Si(OCH₃)₃, Bis-[γ-(Trimethoxysilyl)propyl]amin, organisch modifiziertes Polydimethylsiloxan der Formel 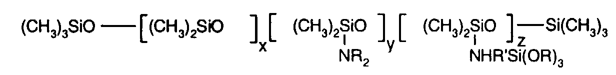 mit R und R' = Alkyl oder Aryl, γ-Ureidopropyltrimethoxysilan, γ-Isocyanatopropyltriethoxysilan, 3-Chlorpropyltrimethoxysilan, 3-Triethoxysilylpropylbernsteinsäureanhydrid, 3-Methacryloxypropyltrimethoxysilan, Vinyltris(2-methoxyethoxy)silan, Vinyltriacetoxysilan, 3-Mercaptopropyltrimethoxysilan, 3-Glycidyloxypropyltriethoxysilan, 3-(2-Aminoethylamino)propyl-trimethoxysilan und 3-(2-Aminoethylamino)propylmethyldimethoxysilan.

Besonders bevorzugt ist Vinyltrimethoxysilan.

Komponente (e) wird vorzugsweise in einer Menge von 0,05-10,0 Gew.-%, insbesondere 0,1-2,0 Gew.-%, bezogen auf die Summe der Komponenten (a) + (b), eingesetzt.

Neben den oben erwähnten Zusätzen können die erfindungsgemässen Zusammensetzungen weitere übliche Zusatzstoffe enthalten, wie z.B. Antioxidantien, Lichtschutzmittel, Weichmacher, Farbstoffe, Füllstoffe, Pigmente, Entschäumer, Antistatika, Gleitmittel und Entformungshilfsmittel.

Weiterhin können die erfindungsgemässen Zusammensetzungen auch inerte Lösungsmittel enthalten.
Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe, wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Bevorzugte Lösungsmittel sind aliphatische und aromatische Kohlenwasserstoffe sowie Gemische solcher Lösungsmittel.

Ein besonderer Vorteil der erfindungsgemässen Zusammensetzungen besteht darin, daß bei flüssigen Monomeren eine Metathesepolymerisation ohne Zusatz eines Lösungsmittels durchgeführt werden kann.

Besonders hervorzuheben ist die hohe Lagerstabilität der erfindungsgemässen Zusammensetzungen, die über sehr lange Zeit stabile Suspensionen bilden, ohne dass eine Sedimentation des Füllstoffs zu beobachten ist.

Die erfindungsgemässen Zusammensetzungen können direkt vor der Polymerisation hergestellt oder als vorformulierte Gemische verwendet werden. Die Gemische können vor der Polymerisation als gebrauchsfertige Formulierungen längere Zeit gelagert werden, was für die grosstechnische Anwendung von Vorteil ist. Es empfiehlt sich jedoch eine Lagerung unter Lichtausschluss, wenn der Katalysator photolabile Liganden enthält.

Einen weiteren Erfindungsgegenstand bildet ein Verfahren zur Herstellung eines Metathesepolymerisats, dadurch gekennzeichnet, dass eine Zusammensetzung enthaltend die Komponenten (a) bis (d) auf eine Temperatur >40 °C erwärmt wird.

Zweckmässig wird das erfindungsgemässe Verfahren bei einer Temperatur von mindestens 60 °C durchgeführt, vorzugsweise bei Temperaturen von 60 bis 300 °C, besonders bevorzugt 60 bis 200 °C und insbesondere bevorzugt 70 bis 160 °C. Nach der Polymerisation kann es vorteilhaft sein, das Gemisch bei erhöhten Temperaturen, zum Beispiel bei 80 bis 200 °C, nachzutempern.

Falls als Komponente (d) eine Verbindung der Formel I mit photolabilen Liganden eingesetzt wird, kann die Metathesepolymerisation auch photochemisch durchgeführt werden. In diesem Fall wird eine Zusammensetzung enthaltend die Komponenten (a) bis (d) mit UV-Strahlung oder sichtbarem Licht bestrahlt und gegebenenfalls thermisch nachgehärtet.

Die Polymerisation kann mit formgebenden Verfahren verbunden sein, zum Beispiel Kalandrier-, Giess-, Press-, Spritzguss- oder Extrusionsverfahren. Mit dem erfindungsgemässen Verfahren können Werkstoffe zur Herstellung von Formkörpern aller Art und Beschichtungen hergestellt werden. Vorteilhaft werden Formgebung und Polymerisation in lösungsmittelfreien Reaktivsystemen verbunden, wobei Verarbeitungsverfahren, wie zum Beispiel Spritzgiessen, Extrusion, Polymerisationen in vorgegebenen Formen (gegebenenfalls unter Druck) angewendet werden können.

Die nach dem erfindungsgemässen Verfahren hergestellten Polymerisate enthalten Homopolymere, Copolymere mit statistischer Verteilung der Struktureinheiten, Pfropfpolymere, Blockpolymere oder vernetzte Polymere. Das mittlere Molekulargewicht dieser Polymere beträgt im allgemeinen von 500 bis zu 2'000'000 Dalton, vorzugsweise 1000 bis 1'000'000 Dalton (bestimmt mittels Gelpermeationschromatographie).

Die nach dem erfindungsgemässen Verfahren hergestellten Polymerisate zeichnen sich vor allem durch eine hohe Wärmestabilität, hohe Zähigkeit und mechanische Festigkeit sowie durch hervorragende elektrische Eigenschaften (niedrige Dielektrizitätskonstante, niedriger Verlustfaktor bzw. tanδ-Wert) aus und eignen sich besonders für Anwendungen in der Vakuum-Giesstechnologie, als Giessharze, lmprägnierharze und insbesondere als Umhüllungsmaterial für elektrische und elektronische Bauteile.
Die gehärteten Vergussmassen weisen gute mechanische und dielektrische Eigenschaften und eine hohe Lebensdauer auf.

Gegenstand der vorliegenden Erfindung ist somit auch die Verwendung der erfindungsgemässen Zusammensetzung als Giessharz, lmprägnierharz und als Umhüllungsmaterial für elektrische oder elektronische Bauteile.

### Beispiele:

Das in den nachfolgenden Beispielen verwendete Dicyclopentadien wird vor Gebrauch ca. 10 Minuten unter Vakuum (3 mbar) entgast.
Weiterhin werden die folgenden kommerziell erhältlichen Substanzen eingesetzt:
- Füllstoffe:: Millisil® W 12 (Quarzmehl, Quarzwerke Frechen)
Wollastonit FW 200 (OY Partek AB, Helsinki)
DS 206 (Aluminiumoxid)
Juraweiss® Gelb-Siegel (CaCO₃) Apyral® 4 (Aluminiumoxidtrihydrat, Nabaltek)
- Core/Shell-Polymere:: Paraloid® EXL 2600 (Methylmethacrylat-Butadien-Styrol, Rohm and Haas)
Paraloid® EXL 2647 (Methylmethacrylat-Butadien-Styrol, Rohm and Haas)
- Silquest® Silan A-171: Vinyltrimethoxysilan (Osi Specialties)

### Beispiele 1-12:

Die in Tabelle 1 angegebene Menge Dicyclopentadien wird mit dem Core/Shell-Polymer gemischt. Unter Rühren wird dann der Füllstoff portionsweise zugegeben; anschliessend wird die Mischung mit einem Dissolver 15 min bei Raumtemperatur gerührt. Mit einem Rheomat RM 265 wird die Viskosität bei 25 °C in einem Mettler-Messbecher MB 125 bei zwei verschiedenen Scherraten gemessen (Viskosität 1: Scherrate 6,65 s⁻¹, Viskosität 2: Scherrate 100 s⁻¹). Die Zusammensetzungen und die Resultate der Viskositätsmessungen sind in den Tabellen 1 und 2 zusammengefasst.

**Tabelle 1:**

| Zusammensetzung | 1 | 2 | 3 | 4 | 5 | 6 |
|---|---|---|---|---|---|---|
| Dicyclopentadien [g] | 40,0 | 40,0 | 40,0 | 39,9 | 29,95 | 29,95 |
| Wollastonit FW 200 [g] | 60,0 | 60,0 | | | | |
| Millisil W 12 [g] | | | 60,0 | 60,0 | 70,0 | 70,0 |
| Paraloid EXL 2647 [g] | | 0,1 | | 0,1 | 0,05 | 0,05 |
| Silan A-171 [g] | | | | | | 0,3 |
| Viskosität 1[MPa·s] | 625 | 1400 | 1350 | 3780 | 4500 | 2600 |
| Viskosität 2 [MPa·s] | 200 | 200 | 900 | 950 | 1400 | 850 |

**Tabelle 2:**

| Zusammensetzung | 7 | 8 | 9 | 10 | 11 | 12 |
|---|---|---|---|---|---|---|
| Dicyclopentadien [g] | 40,0 | 39,8 | 39,95 | 39,95 | 40,0 | 39,9 |
| Wollastonit FW 200 [g] | | | 30,0 | 30,0 | | |
| DS 206 [g] | 60,0 | 60,0 | | | | |
| Juraweiss Gelb-Siegel [g] | | | 30,0 | 30,0 | | |
| Apyral 4 [g] | | | | | 60,0 | 60,0 |
| Paraloid EXL 2600 [g] | | 0,2 | | | | |
| Paraloid EXL 2600 [g] | | | 0,05 | 0,05 | | 0,1 |
| Silan A-171 [g] | | | | 0,3 | | |
| Viskosität 1[MPa·s] | 1750 | 3700 | 2800 | 2250 | 2250 | 5600 |
| Viskosität 2 [MPa·s] | 400 | 750 | 1200 | 600 | 800 | 1200 |

Die Mischungen der Beispiele 1-12 können nach Zugabe von (C₆H₁₁)₃P(p-Cymol)RuCl₂ als ROMP-Katalysator problemlos polymerisiert werden und liefern Polymerisate mit guten mechanischen und elektrischen Eigenschaften.

## Patentansprüche

1. Zusammensetzung enthaltend
(a) ein gespanntes Cycloolefin,
(b) einen Füllstoff und
(c) 0,01-10,0 Gew.-%, bezogen auf die Summe der Komponenten (a) + (b), eines Copolymeren ausgewählt aus Core/Shell-Polymeren und Mikrogelen.

2. Zusammensetzung nach Anspruch 1, enthaltend als Komponente (a) ein Diels-Alder-Addukt von Cyclopentadien.

3. Zusammensetzung nach Anspruch 1, enthaltend als Komponente (a) Norbornen, Norbornadien, Cyclohexenylnorbornen, Dicyclopentadien, Tetracyclododecen oder Methyltetracyclododecen.

4. Zusammensetzung nach Anspruch 1, enthaltend als Komponente (b) ein Metalloxid, -carbonat, -sulfat oder -silikat oder SiO₂.

5. Zusammensetzung nach Anspruch 1, enthaltend als Komponente (b) CaCO₃, Al₂O₃, Al(OH)₃, Wollastonit oder SiO₂.

6. Zusammensetzung nach Anspruch 1, enthaltend als Komponente (c) ein Core/Shell-Polymer.

7. Zusammensetzung nach Anspruch 1, enthaltend als Komponente (c) ein Mikrogel.

8. Zusammensetzung nach Anspruch 1, worin das Gewichtsverhältnis der Komponenten (a) : (b) von 5 : 1 bis 1 : 5 beträgt.

9. Zusammensetzung nach Anspruch 1, enthaltend 0,02-2,0 Gew.-% der Komponente (c), bezogen auf die Summe der Komponenten (a) + (b).

10. Zusammensetzung nach Anspruch 1, enthaltend zusätzlich
(d) einen Katalysator für die ringöffnende Metathese-Polymerisation.

11. Zusammensetzung nach Anspruch 1, enthaltend zusätzlich
(e) ein Silan der Formel II 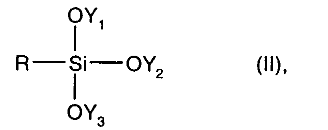 worin R für eine einwertige organische Gruppe mit 2 bis 100 C-Atomen steht, wobei ein oder mehrere C-Atome durch O-, S-, N- oder Si-Atome ersetzt sein können und Y₁, Y₂ und Y₃ unabhängig voneinander C₁-C₂₀-Alkyl, C₅-C₂₀-Aryl, C₆-C₂₀-Aralkyl, C₅-C₁₂-Cycloalkyl, C₂-C₂₀-Alkoxyalkyl oder C₁-C₂₀-Acyl bedeuten.

12. Verfahren zur Herstellung eines Metathesepolymerisats, dadurch gekennzeichnet, dass eine Zusammensetzung nach Anspruch 10 oder 11 auf eine Temperatur >40 °C erwärmt wird.

13. Verwendung der Zusammensetzung nach Anspruch 10 oder 11 als Umhüllungsmaterial für elektrische oder elektronische Bauteile.
